# EUROPÄISCHE PATENTANMELDUNG

(11) **EP 2 982 435 A1**
(43) Veröffentlichungstag der Anmeldung: **10.02.2016**
(21) Anmeldenummer: 14002766.5
(22) Anmeldetag: 07.08.2014
(51) Int. Cl.: B01J 37/34, B01J 35/10, B01J 35/00, B01J 27/20, B01J 21/06

(54) **Verfahren zur Herstellung eines kohlenstoffhaltigen Photokatalysators auf Basis von Titandioxid**

(71) Anmelder: KRONOS INTERNATIONAL, INC., 51373 Leverkusen (DE)
(72) Erfinder: Friedrich, Jörg, 42799 Leichlingen (DE); Meifert, Raimund, 40547 Düsseldorf (DE)

(57) **Zusammenfassung**

Die Erfindung betrifft ein Verfahren zur Herstellung eines partikelförmigen kohlenstoffhaltigen Photokatalysators auf Basis von Titandioxid in einem Pulsationsreaktor, wobei eine Rohstoffmischung aus Titanoxyhydrat und mindestens einer organischen kohlenstoffhaltigen Verbindung in Form einer wässrigen Suspension in den pulsierenden Heißgasstrom des Pulsationsreaktors eingebracht und die kohlenstoffhaltigen Titandioxidpartikel gebildet werden. Der Heißgasstrom weist eine Temperatur von 750 bis 900°C auf und enthält Sauerstoff im Überschuss.

Im Gegensatz zu den bekannten Herstellverfahren, bei denen die thermische Behandlung der Rohstoffmischung in üblichen Temperaggregaten wie Drehrohröfen, Fließbettreaktoren oder beheizten Pflugscharmischern abläuft, zeichnet sich das erfindungsgemäße Verfahren dadurch aus, dass die organische kohlenstoffhaltige Verbindung kontrolliert oxidiert wird und dadurch reproduzierbar gute Produktqualitäten erreicht werden können.

## Beschreibung

### Gebiet der Erfindung

Die Erfindung betrifft ein Verfahren zur Herstellung eines kohlenstoffhaltigen Photokatalysators auf Basis von Titandioxid.

### Technologischer Hintergrund der Erfindung

Die WO 2005/108505 A1 offenbart ein Verfahren zur Herstellung eines kohlenstoffhaltigen Photokatalysators auf der Basis von Titandioxid, der im sichtbaren Licht photoaktiv ist. Das Verfahren geht von einer Ausgangstitanverbindung aus, die in Form eines amorphen oder teilkristallinen Titanoxids, wasserhaltigen Titanoxids, Titanhydrats oder Titanoxyhydrats vorliegt. Die Ausgangstitanverbindung liegt entweder als feinkörniger Feststoff oder als Suspension vor und weist eine spezifische Oberfläche nach BET von mindestens 50 m²/g auf. Die Ausgangstitanverbindung wird mit einer kohlenstoffhaltigen Substanz vermischt und anschließend bei bis zu 400°C thermisch behandelt. Die thermische Behandlung führt einerseits zur Bildung von kristallinem Titandioxid und soll andererseits eine Oberflächenreaktion der kohlenstoffhaltigen Verbindung in Form einer teilweisen Zersetzung und einer Modifizierung der Titandioxid-Partikeloberfläche bewirken.

Das hergestellte Produkt enthält Kohlenstoff in einer Menge von 0,5 bis 4 Gew,-% in einer Oberflächenschicht und auf der Oberfläche der Titandioxidpartikel und weist bevorzugt eine spezifische Oberfläche von 100 bis 250 m²/g auf.

Gemäß WO 2005/108505 A1 wird die thermische Behandlung in Temperaggregaten wie Drehrohröfen, Fließbettreaktoren, Wirbelschichttrocknern oder beheizten Pflugscharmischern in kontinuierlicher oder z.T. auch in diskontinuierlicher Fahrweise durchgeführt. Mit diesen Verfahrensweisen können zwar gute Produktqualitäten erreicht werden, es ist jedoch nicht möglich, über längere Zeiträume eine gleichmäßige Produktqualität, d.h. eine Reproduzierbarkeit zu erzielen. Die Qualitätsschwankungen werden durch im Temperaggregat auftretende Temperaturprofile und breite Verweilzeitverteilungen hervorgerufen. Bei Auftreten von Temperaturspitzen an bestimmten Punkten im Temperaggregat ("Temperaturhotspot") laufen unkontrollierte Abbaureaktionen der organischen Verbindungen ab bis hin zur vollständigen Verbrennung der organischen Verbindungen, wodurch einerseits die Photoaktivität und andererseits der Farbton des Produkts durch eingelagerten Ruß verschlechtert wird. Desweiteren entstehen leicht Agglomerate, wodurch bei Auftreten von Temperaturhotspots die vollständige Verbrennung der organischen Verbindungen partikelübergreifend stattfinden kann.

Es besteht somit das Bedürfnis nach einem Herstellverfahren für kohlenstoffhaltige Photokatalysatoren auf Basis von Titandioxid, mit Hilfe dessen auch über einen längeren Zeitraum gleichmäßige gute Produktqualitäten hergestellt werden können.

### Aufgabenstellung und Kurzbeschreibung der Erfindung

Der Erfindung liegt die Aufgabe zugrunde, ein Verfahren zur Herstellung von kohlenstoffhaltigen Photokatalysatoren auf Basis von Titandioxid anzugeben, mit Hilfe dessen auch über einen längeren Zeitraum gleichmäßige gute Produktqualitäten hergestellt werden können.

Die Aufgabe wird gelöst durch ein Verfahren zur Herstellung eines partikelförmigen kohlenstoffhaltigen Photokatalysators auf Basis von Titandioxid in einem Pulsationsreaktor, dadurch gekennzeichnet, dass
eine Rohstoffmischung aus Titanoxyhydrat und mindestens einer organischen kohlenstoffhaltigen Verbindung in Form einer wässrigen Suspension in den pulsierenden Heißgasstrom des Pulsationsreaktors eingebracht, kohlenstoffhaltige Titandioxidpartikel gebildet und die Partikel abgetrennt werden,
wobei der Heißgasstrom Sauerstoff im Überschuss enthält und die Temperatur des Heißgasstroms 750 bis 900°C beträgt.

Weitere vorteilhafte Ausformungen der Erfindung sind in den Unteransprüchen angegeben.

### Figuren

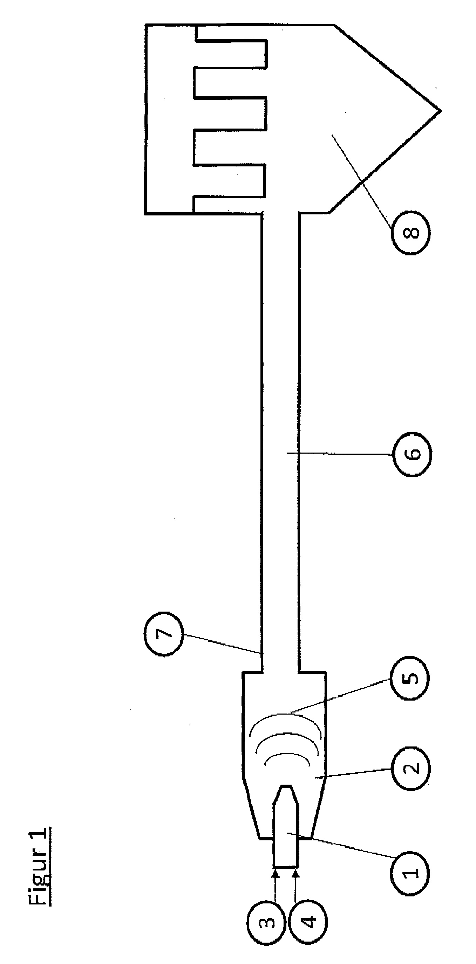

Fig. 1: Schematisches Verfahrensfließbild

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Die vorliegende Erfindung geht von dem aus der WO 2005/108505 A1 bekannten Herstellverfahren für einen kohlenstoffhaltigen Photokatalysator auf Basis Titandioxid aus, gemäß welchem eine Titanverbindung mit einer organischen Kohlenstoffverbindung vermischt und die Mischung bei einer Temperatur von bis zu 400°C in oxidierender Atmosphäre thermisch behandelt wird. Dabei kommt es zur Bildung von Titanoxidpartikeln sowie zu einer teilweisen oxidativen Zersetzung / Reaktion der organischen Kohlenstoffverbindung. Die verbliebene Kohlenstoffkomponente (End-Kohlenstoffgehalt) soll auf der Oberfläche bzw. in einer Oberflächenschicht der Titanoxidpartikel eingelagert bzw. chemisorbiert werden.

Es hat sich gezeigt, dass die thermische Behandlung der wichtigste qualitätsbeeinflussende Schritt für die photokatalytische Aktivität des Endprodukts ist. In den üblichen Temperaggregaten wie Drehrohröfen, Fließbettreaktoren, Wirbelschichttrocknern oder beheizten Pflugscharmischern läuft die Oxidationsreaktion der organischen Kohlenstoffverbindung jedoch nicht gleichmäßig und reproduzierbar ab, weil sowohl Temperatur (Temperaturhotspots) wie Sauerstoff als auch die Titanverbindung wie die Kohlenstoffverbindung in den Aggregaten nicht homogen verteilt sind. Zudem wird die starke Agglomerationsneigung der organikbehafteten Partikel in den oben genannten Verfahren verstärkt, so dass durch auftretende Temperaturhotspots die organische Kohlenstoffverbindung unkontrolliert agglomeratübergreifend exotherm zerfällt bzw. irreversibel verglüht und Produkt mit stark minderwertiger Qualität entsteht. Da sich in den genannten Temperaggregaten oberflächenübergreifende Schüttungen befinden, greift der exotherme Zerfall der organischen Kohlenstoffverbindung auf das gesamte Produktvolumen über, weswegen ganze Produktionschargen mit stark minderwertiger Qualität entstehen können.

Im Gegensatz dazu ermöglicht das erfindungsgemäße Verfahren eine kontrollierte Oxidationsreaktion der organischen kohlenstoffhaltigen Verbindung in dem Gemisch Titanoxyhydrat/kohlenstoffhaltige Verbindung, wodurch reproduzierbar gute Produktqualitäten erzielt werden können.

Das erfindungsgemäße Verfahren basiert auf einem aus WO 2002/072471 A2 und EP 2 092 976 B1 bekannten Verfahren zur Herstellung von Metalloxidpulvern in einem Pulsationsreaktor. Das Pulsationsreaktor-Verfahren zeichnet sich dadurch aus, dass die hergestellten Produkte eine reproduzierbare gute Qualität und keine groben Agglomerate aufweisen. Ein Pulsationsreaktor besteht aus einem Brenner, einer Brennkammer, einem sich daran anschließenden Resonanzrohr mit einem gegenüber der Brennkammer verringerten Strömungsquerschnitt und einem geeigneten Filter zur Abscheidung der Partikel. Das Wirkprinzip eines Pulsationsreaktors ist in den genannten Patentschriften detailliert beschrieben. In der Brennkammer wird ein pulsierender Heißgasstrom über ein selbstregelndes System erzeugt. Dabei werden das Brenngas und die Verbrennungsluft in der Brennkammer gezündet, verbrennen sehr schnell und erzeugen eine Druckwelle in Richtung des Resonanzrohres, da der Brenngaseintritt in die Brennkammer durch aerodynamische Ventile bei Überdruck verschlossen wird. Durch das Ausströmen des Heißgases in das Resonanzrohr wird ein Unterdruck in der Brennkammer erzeugt, so dass durch die Ventile neues Brenngas nachströmt und zündet.

Der pulsierende Heißgasstrom bietet aufgrund der hohem Strömungsturbulenzen den Vorteil eines deutlich erhöhten Wärmeübergangs zwischen den in den Heißgasstrom eingebrachten Komponenten eines Reaktionsgemisches und damit einer gleichmäßigen chemischen Reaktion innerhalb kurzer Verweilzeiten im Bereich von Millisekunden bis Sekunden.

Die bekannten Verfahren zur Herstellung von Metalloxidpulvern in einem Pulsationsreaktor gemäß WO 2002/072471 A2 und EP 2 092 976 B1 basieren auf der Umsetzung einer Rohstoffmischung aus Metallsalzen, Metalloxiden oder Metallen zu den entsprechenden Metalloxiden. DE 10 2006 046 806 B4 offenbart darüber hinaus eine Verfahrensvariante zur in situ-Beschichtung der Partikel mit anorganischen und/oder organischen Komponenten. Die in situ-Beschichtung erfolgt durch Zuführung einer geeigneten Beschichtungskomponente in den Heißgasstrom in einem Bereich, der dem Zuführungspunkt der Rohstoffmischung für die Partikelbildung nachgelagert ist. Vorzugsweise wird bei der Aufbringung einer organischen Beschichtung der Heißgasstrom in diesem Bereich gekühlt, beispielsweise auf unter 300°C.

Überraschenderweise werden mit dem erfindungsgemäßen Verfahren reproduzierbare End-Kohlenstoffgehalte und damit eine gleichmäßig gute Produktqualität der TiO₂-basierten Photokatalysatoren erreicht, obwohl die Behandlungstemperatur etwa doppelt so hoch ist wie die bisher angewendete Temperatur (maximal 400°C in WO 2005/108505 A1) und etwa doppelt so hoch ist wie die Zersetzungstemperatur der verwendeten organischen kohlenstoffhaltigen Verbindungen. Zudem werden durch die Pulsation des Brenngases alle Agglomerate weitgehend in ihre Primärpartikel zerschlagen, wodurch der unkontrollierte oberflächenübergreifende Zerfall der organischen Kohlenstoffverbindung verhindert und eine optimale Verteilung von Sauerstoff, Titanverbindung und organischer Kohlenstoffverbindung erreicht wird.

Das erfindungsgemäße Verfahren geht von einer Rohstoffmischung aus, die Titanoxyhydrat enthält. Unter Titanoxyhydrat wird im Rahmen der Erfindung amorphes, teilkristallines oder kristallines Titanoxid bzw. wasserhaltiges Titanoxid und/oder Titanhydrat oder Titanoxyhydrat oder Titanoxidhydrat oder Metatitansäure verstanden. Titanoxyhydrat kann beispielsweise bei der Titandioxidherstellung nach dem Sulfatverfahren oder nach dem Chloridverfahren erzeugt werden. Es wird z.B. bei der Hydrolyse von Titanylsulfat oder Titanylchlorid gefällt.

Das Titanoxyhydrat wird erfindungsgemäß pulverförmig oder als wässrige Suspension mit einem Feststoffgehalt von mindestens 10 Gew.-%, insbesondere von 20 bis 40 Gew.-% eingesetzt.

Das Titanoxyhydrat weist bevorzugt eine spezifische Oberfläche von mindestens 50 m²/g nach BET, bevorzugt etwa 150 bis 350 m²/g nach BET auf.

In einer besonderen Ausführung der Erfindung wird schwefelsaures Titanoxyhydrat aus dem Sulfatprozess zur Titandioxidherstellung eingesetzt, welches zuvor neutralisiert und gewaschen wurde, so dass der Sulfatanteil des Feststoffs nach Trocknung <1 Gew.-% gerechnet als SO₃ beträgt.

Als organische kohlenstoffhaltige Verbindung sind im Prinzip alle Kohlenwasserstoffe mit mindestens einer funktionellen Gruppe geeignet. Die funktionelle Gruppe kann sein: OH; CHO; COOH; NHₓ; SHₓ; COOR, wobei R ein Alkyl- oder Arylrest ist. Es kommen beispielsweise Bernsteinsäure, Glyzerin oder Ethylenglykol in Frage. Es können auch Zucker oder andere Kohlenhydrate eingesetzt werden, ebenso Organoammoniumhydroxide, insbesondere Tetraalkylammonium. Geeignet sind auch Mischungen der genannten Verbindungen. Vorzugsweise werden wasserlösliche Polyalkohole mit einem Kohlenstoff/Sauerstoff-Verhältnis von etwa 0,7 bis 1,5, bevorzugt von etwa 1 verwendet. Insbesondere geeignet sind Pentaerythrit und Zitronensäure.

Die erfindungsgemäße Rohstoffmischung wird bevorzugt folgendermaßen hergestellt: In einem Rührbehälter wird eine definierte Menge Wasser vorgelegt und die organische Kohlenstoffverbindung vollständig darin gelöst. Gegebenenfalls wird die Lösung erwärmt, um eine vollständige Auflösung der Kohlenstoffverbindung zu erreichen.

Anschließend wird eine definierte Menge Titanoxyhydrat entweder pulverförmig oder als bereits angeteigte Suspension hinzugegeben und homogenisiert. Bevorzugt wird ein Hochleistungsmischer (z.B. Leitstrahlmischer) eingesetzt.

Die Kohlenstoffverbindung wird bevorzugt in einer Menge von 1,5 bis 4 Gew.-%, insbesondere 2 bis 2,5 Gew.-% gerechnet als Kohlenstoff und bezogen auf Titanoxyhydrat (Feststoff) zugegeben. Der Feststoffgehalt der Suspension beträgt bevorzugt mindestens 10 Gew.-%, insbesondere 20 bis 40 Gew.-%.

Erfindungsgemäß wird als Temperaggregat ein Pulsationsreaktor eingesetzt, wie er in WO 2002/072471 A2 bzw. in EP 2 092 976 B1 beschrieben und in Figur 1 schematisch dargestellt ist. Der Pulsationsreaktor besteht im wesentlichen aus einem Brenner (1), einer Brennkammer (2), einem daran anschließenden Resonanzrohr (6) und einer Partikelabscheidevorrichtung (8). In den Brenner (1) werden Brenngas (3) und Verbrennungsluft (4) geleitet und in der Brennkammer (2) gezündet. Das Brenngas verbrennt sehr schnell und erzeugt eine Druckwelle in Richtung des Resonanzrohres (6), da der Brenngaseintritt in die Brennkammer (2) durch aerodynamische Ventile bei Überdruck verschlossen wird. Durch das Ausströmen des Heißgases (5) in das Resonanzrohr (6) wird ein Unterdruck in der Brennkammer (2) erzeugt, so dass durch die Ventile neues Brenngas nachströmt und zündet. Auf diese Weise entsteht ein pulsierender Heißgasstrom.

Die Rohstoffmischung (7) wird am Eingang des Resonanzrohres in den pulsierenden Heißgasstrom eingeleitet. Im Heißgasstrom wird die Suspension (Rohstoffmischung) getrocknet, woraufhin die organische Verbindung kristallisiert und auf der Oberfläche der gebildeten TiO₂-Partikel adsorbiert. Die TiO₂-Partikel werden anschließend in der Partikelabscheidevorrichtung (8), beispielsweise einem geeigneten Bagfilter, aus dem Gasstrom abgetrennt. Die Verweilzeit der Partikel im Heißgasstrom beträgt wenige Sekunden.

Erfindungsgemäß können kohlenstoffhaltige Photokatalysatorpartikel auf Basis Titandioxid mit optimierter photokatalytischer Aktivität und reproduzierbarer Qualität hergestellt werden, wenn die Brennkammertemperatur im Bereich von 750 bis 900°C liegt und der Heißgasstrom Sauerstoff im Überschuss bezogen auf die angestrebte Oxidationsreaktion der organischen Kohlenstoffverbindung enthält, wobei der Sauerstoffgehalt über den Volumenstrom des Heißgases gesteuert wird.

Ein weiterer Betriebsparameter des erfindungsgemäßen Verfahrens ist die Frequenz des pulsierenden Heißgasstroms. Frequenz, Volumenstrom und Geometrie des Resonanzrohrs (Länge, Durchmesser) bestimmen die Verweilzeit der Partikel und der Kohlenstoffverbindung im Reaktor.

Ein Maß für die angestrebte photokatalytische Aktivität der Partikel ist der Kohlenstoffgehalt im Endprodukt. Der Fachmann wird bei gegebener Zusammensetzung der Rohstoffmischung die Parameter Temperatur, Volumenstrom, Frequenz, Durchsatz und Verweilzeit so einstellen, dass ein vorher definierter Kohlenstoffgehalt im Endprodukt (End-Kohlenstoffgehalt) erreicht wird. Dabei bestehen folgende Abhängigkeiten: Eine schnellere Kohlenstoffoxidation, d.h. niedrigere End-Kohlenstoffgehalte werden beispielsweise erreicht durch eine Temperaturerhöhung innerhalb des vorgegebenen Temperaturbereichs von 750 bis 900°C bzw. durch eine Erhöhung der Frequenz, wodurch sich größere Turbulenzen und eine beschleunigte Reaktion ergeben. Weiterhin werden niedrigere End-Kohlenstoffgehalte erreicht, wenn die Verweilzeit verlängert wird, beispielsweise durch eine Veränderung der Reaktorgeometrie oder durch Verringerung des Volumenstroms. Allerdings darf der Volumenstrom nur so weit verringert werden, dass der Sauerstoffüberschuss erhalten bleibt.

Höhere End-Kohlenstoffgehalte können entsprechend beispielsweise erreicht werden durch Erhöhung des Volumenstroms, wodurch sich die Verweilzeit erniedrigt, oder durch Erhöhung des Durchsatzes, wobei durch Verdunstung von höheren Mengen Wassers die Temperatur erniedrigt wird.

In einer besonderen Ausführung der Erfindung wird als Rohstoffmischung eine wässrige Suspension aus Titanoxyhydrat und Pentaerythrit als organischer Kohlenstoffverbindung mit einem Kohlenstoffgehalt von 2 bis 2,5 Gew.-% bezogen auf Feststoff eingesetzt und die Betriebsparameter so eingestellt, dass ein End-Kohlenstoffgehalt von 0,3 bis 1,5 Gew.-% bevorzugt 0,8 bis 1,2 Gew.-% erreicht wird.

Das erfindungsgemäße Verfahren zeichnet sich dadurch aus, dass die in der Suspension der Rohstoffmischung vorhandenen und in den pulsierenden Heißgasstrom eingebrachten Titanoxyhydrat-Partikelagglomerate durch die starken Pulse optimal bis hin zu Primärpartikeln vereinzelt werden und die auf der Partikeloberfläche adsorbierte organische Kohlenstoffverbindung infolge des Sauerstoffüberschusses gleichmäßig oxidativ zersetzt werden kann. Durch die Pulsation werden zudem Temperatur- und Konzentrationsgradienten minimiert, weswegen die Oxidationsreaktion innerhalb von wenigen Sekunden, beispielsweise innerhalb von 3 Sekunden durchgeführt werden kann. Auf diese Weise wird eine gleichmäßige Qualität des Endprodukts erreicht.

Ein weiterer Vorteil des erfindungsgemäßen Verfahren ist, dass die Trocknung der wässrigen Suspension zeitgleich mit der thermischen Behandlung im Pulsationsreaktor stattfindet und somit ein kostenaufwändiger Extra-Trocknungsschritt vermieden wird.

### Beispiele

Die Erfindung wird anhand der folgenden Beispiele genauer beschrieben, ohne dass dadurch der Umfang der Erfindung eingeschränkt werden soll.

Zur Herstellung der Rohstoffmischung wurde 650 kg Wasser einer Temperatur von 20°C vorgelegt und unter Rühren 17,5 kg Pentaerythrit zugegeben und vollständig gelöst.

Anschließend wurde 350 kg Titanoxyhydrat aus dem Sulfatprozess zur Titandioxidherstellung mit einem Sulfatgehalt von etwa 0,3 Gew.-% bezogen auf Trockenfeststoff unter Rühren zugegeben. Die Suspension (Rohstoffmischung) enthielt 35 Gew.-% Feststoff und 2,2 Gew.-% Kohlenstoff bezogen auf Titanoxyhydrat.

Die Rohstoffmischung wurde in einen Pulsationsreaktor gemäß EP 2 092 976 B1 eingeführt. Die Betriebsbedingungen der einzelnen Versuche (Durchsatz, Volumenstrom, Frequenz, Brennkammertemperatur) sind in Tabelle 1 angegeben zusammen mit den an den erzeugten Photokatalysatorpartikeln gemessenen Eigenschaften (Kohlenstoffgehalt, photokatalytische Aktivität und Helligkeit L).

**Tabelle 1**

| Nr | Durchsatz | Volumenstrom | Frequenz | Brennkammertemperatur | Kohlenstoffgehalt | Photokat. Aktivität | L |
|---|---|---|---|---|---|---|---|
| | (kg/h) | (m³/h) | (Hz) | (°C) | (Gew.-%) | | |
| 1 | 70 | 21 | 55,6 | 867 | 1,18 | 102 | 90 |
| 2 | 120 | 26 | 70,5 | 833 | 0,87 | 94 | 89 |
| 3 | 120 | 25 | 71,2 | 830 | 0,93 | 102 | 88 |
| 4 | 140 | 23,5 | 71,4 | 770 | 1,24 | 89 | 86 |
| 5 | 140 | 27 | 71,0 | 846 | 0,92 | 102 | 88 |
| 6 | 160 | 27 | 72,1 | 845 | 0,96 | 106 | 86 |

### Testmethoden:

### Kohlenstoffgehalt

Der Kohlenstoffgehalt wird mittels eines Kohlenstoffanalysator LECO C-200 bestimmt.

### Photokatalytische Aktivität

Die photokatalytische Aktivität wird anhand der Abbaurate von 4-Chlorphenol (4-CP) unter Belichtung bestimmt. Dazu wird eine Suspension von 300 mg Photokatalysator in 100 g einer wässrigen 0,1 mmol/L 4-CP-Lösung hergestellt, im Dunklen gerührt, anschließend mit blauem (455 nm) oder ultraviolettem Licht (365 nm) bestrahlt und dabei der Abbau des 4-CP in Abhängigkeit von der Zeit (0 bis 90 min) mittels UV/Vis Photometer bei einer Wellenlänge von 223 nm bestimmt. Die Aktivität (dimensionslos) berechnet sich aus der negativen Steigungskonstante "k" der logarithmischen Abbaukurve multipliziert 6000, die Standardabweichung beträgt 6. Die einfache Standardabweichung liegt bei 11.

### Helligkeit L

Zur Messung der Helligkeit L wird ein Pulverpressling hergestellt und die Remissionswerte mit einem Colorimeter PD-9000 bestimmt. Die daraus abgeleiteten L-Werte sind auf einen inneren Standard bezogen.

## Patentansprüche

1. Verfahren zur Herstellung eines partikelförmigen kohlenstoffhaltigen Photokatalysators auf Basis von Titandioxid in einem Pulsationsreaktor, **dadurch gekennzeichnet, dass**
eine Rohstoffmischung aus Titanoxyhydrat und mindestens einer organischen kohlenstoffhaltigen Verbindung in Form einer wässrigen Suspension in den pulsierenden Heißgasstrom des Pulsationsreaktors eingebracht, kohlenstoffhaltige Titandioxidpartikel gebildet und die Partikel abgetrennt werden,
wobei der Heißgasstrom Sauerstoff im Überschuss enthält und die Temperatur des Heißgasstroms 750 bis 900°C beträgt.

2. Verfahren nach Anspruch 1 **dadurch gekennzeichnet, dass** das Titanoxyhydrat entweder pulverförmig oder in Form einer wässrigen Suspension mit einem Feststoffgehalt von mindestens 10 Gew.-% bevorzugt 20 bis 40 Gew.-% in die Rohstoffmischung eingebracht wird.

3. Verfahren nach Anspruch 1 oder 2 **dadurch gekennzeichnet, dass** das Titanoxyhydrat eine spezifische Oberfläche (BET) von mindestens 50 m²/g bevorzugt 150 bis 350 m²/g aufweist.

4. Verfahren nach einem oder mehreren der Ansprüche 1 bis 3 **dadurch gekennzeichnet, dass**
die organische kohlenstoffhaltige Verbindung in der Rohstoffmischung in wässriger Lösung vorliegt.

5. Verfahren nach einem oder mehreren der Ansprüche 1 bis 4 **dadurch gekennzeichnet, dass**
die organische kohlenstoffhaltige Verbindung ein Kohlenwasserstoff mit mindestens einer funktionellen Gruppe ist, wobei die funktionelle Gruppe ausgewählt ist aus OH; CHO; COOH; NHₓ; SHₓ; COOR, wobei R ein Alkyl-oder Arylrest ist.

6. Verfahren nach Anspruch 5 **dadurch gekennzeichnet, dass** die organische kohlenstoffhaltige Verbindung ausgewählt ist aus der Gruppe der wasserlöslichen Polyalkohole mit einem Kohlenstoff/Sauerstoff-Verhältnis von etwa 0,7 bis 1,5,

7. Verfahren nach Anspruch 6 **dadurch gekennzeichnet, dass** die organische kohlenstoffhaltige Verbindung Pentaerythrit oder Zitronensäure ist.

8. Verfahren nach einem oder mehreren der Ansprüche 1 bis 7 **dadurch gekennzeichnet, dass**
die Rohstoffmischung eine wässrige Suspension aus Titanoxyhydrat und Pentaerythrit ist mit einem Kohlenstoffgehalt von 1,5 bis 4 Gew.-% bevorzugt 2 bis 2,5 Gew.-% bezogen auf Titanoxyhydrat.

9. Verfahren nach Anspruch 8 **dadurch gekennzeichnet, dass** die gebildeten kohlenstoffhaltigen Titandioxidpartikel einen Kohlenstoffgehalt von 0,3 bis 1,5 Gew.-% bevorzugt 0,8 bis 1,2 Gew.-% aufweisen.
